# EUROPÄISCHE PATENTSCHRIFT

(11) **EP 1 659 869 B1**
(45) Veröffentlichungstag und Bekanntmachung des Hinweises auf die Patenterteilung: **20.12.2006**
(21) Anmeldenummer: 04764042.0
(22) Anmeldetag: 12.08.2004
(51) Int. Cl.: A22C 25/00, A22C 25/14, A22C 25/16

(54) **VERFAHREN ZUM GESTEUERTEN MASCHINELLEN BEARBEITEN VON GEKÖPFTEM UND ENTWEIDETEM WEISSFISCH SOWIE VORRICHTUNG ZUM DURCHFÜHREN DES VERFAHRENS**
METHOD FOR CONTROLLING MECHANICAL PROCESSING HEADLESS AND GUTTED WHITEFISH AND DEVICE FOR CARRYING OUT SAID METHOD
PROCEDE DE COMMANDE D'UN TRAITEMENT MECANIQUE DE POISSONS BLANCS A TETES TRANCHEES ET VIDES, ET DISPOSITIF POUR LA MISE EN OEUVRE DE CE PROCEDE

(30) Priorität: 06.09.2003 DE 10341941
(43) Veröffentlichungstag der Anmeldung: 31.05.2006
(73) Patentinhaber: NORDISCHER MASCHINENBAU RUD. BAADER GMBH + CO KG, 23560 Lübeck (DE)
(72) Erfinder: PAULSOHN, Carsten, 23564 Lübeck (DE); SCHMÜSER, Dirk, 26311 Sereetz (DE)
(74) Vertreter: Wenzel & Kalkoff
(86) Internationale Anmeldenummer: PCT/EP2004/009038
(87) Internationale Veröffentlichungsnummer: WO 2005/023009

(56) Entgegenhaltungen:
- DE-B- 2 832 259
- US-A- 2 993 227
- US-A- 3 139 648
- US-A- 4 195 387
- US-A- 4 446 601
- US-A- 5 628 680

## Beschreibung

Die Erfindung betrifft ein Verfahren zum gesteuerten maschinellen Bearbeiten von geköpftem und entweidetem Weißfisch, insbesondere zum Herstellen von Salzfisch, wobei die Hauptgräte im Bereich der Bauchhöhle herausgetrennt wird. Die Erfindung bezieht sich auch auf eine zum Durchführen des Verfahrens geeignete Vorrichtung. Als zu bearbeitender Weißfisch seien zum Beispiel Dorsch, Seelachs, Brosme und Leng genannt.

Beim Heraustrennen der Hauptgräte im Bereich der Bauchhöhle verbleibt ein Teil des Nackenbluts und ein Teil des Blutsacks am schwanzseitigen Ende der Bauchhöhle im Produkt. Diese Blutreste werden herkömmlich manuell entfernt, nachdem das Weißfischprodukt der Fischbearbeitungsmaschine entnommen worden ist. Die erforderlichen Arbeitsgänge sind zeit- und personalaufwendig. Übliche manuelle Bürstenreinigung muß relativ intensiv, nämlich tiefwirkend, großflächig sowie auch zeitlich lang an offenem Fleisch angreifen. Dabei besteht die Gefahr von Kontamination, indem Bakterien weitflächig über das Fleisch verteilt werden (vgl. zum Stand der Technik US 4 195 387 und US 3 139 648).

Der Erfindung liegen die Ziele zugrunde, die genannte Bearbeitung von Weißfisch hinsichtlich der Entfernung von Blutresten zu vereinfachen. Die Reinigung soll weitgehend maschinell sowie produktschonend erfolgen und bei herkömmlicher manueller Bürstenreinigung bestehende Kontaminationsgefahr beseitigen. Eine zum Durchführen des Verfahrens geeignete Vorrichtung soll einfach bauen sowie für in Länge und Gewicht sehr unterschiedliche Weißfische mit optimaler Durchsatzgeschwindigkeit betreibbar sein.

Die Ziele werden bei dem eingangs genannten Verfahren dadurch erreicht, daß kopfseitig freiliegende Nackenblutreste, mit denen der zu bearbeitende Fisch behaftet ist, vor dem Heraustrennen der Hauptgräte von durchtrennten seitlichen Blutnieren des mit Hauptgräte versehenen, zu bearbeitenden Fischrumpfes mit wenigstens einem auf die Nackenblutreste ausgerichteten Reinigungs-Hochdruckflüssigkeitsstrahl entfernt werden. Bei einer zum Durchführen des Verfahrens geeigneten Vorrichtung, die eine eine Förderstrecke bestimmende Fördereinrichtung zum Fördern des zu bearbeitenden Fisches in Mehrzahl und eine an der Förderstrecke angeordnete Entgrätungseinrichtung zum Heraustrennen der Hauptgräte im Bereich der Bauchhöhle umfaßt, wird erfindungsgemäß längs der Förderstrecke in Fischlaufrichtung vor der Entgrätungseinrichtung eine Hochdruckflüssigkeitsstrahl-Reinigungseinrichtung zum Entfernen von kopfseitigen freiliegenden Nackenblutresten von durchtrennten seitlichen Blutnieren des mit Hauptgräte versehenen, zu bearbeitenden Fischrumpfes so angeordnet, dass wenigstens ein von der Reinigungseinrichtung abgestrahlter Reinigungs-Hochdruck flüssigkeitsstrahl auf die freiliegenden Nackenblutreste derart ausgerichtet ist, dass das Fischfleisch durch die die Hauptgräte bauchseitig überspannende Fischmembran vor dem Hochdruckflüssigkeitsstrahl geschützt bleibt. Eine wesentliche erfindungsgemäße Maßnahme besteht darin, daß jedenfalls der Großteil von Nackenblutresten mittels wenigstens eines Hochdruckflüssigkeitsstrahles selbsttätig in einer Fischmaschine und weitgehend produktschonend entfernt wird. Dies gelingt dadurch, daß an der Fischmembran hervortretendes, in Vertiefungen freiliegendes Nackenblut mit unter hohem Druck stehender Flüssigkeitsbestrahlung, vorteilhaft und zweckmäßig mit Wasser, entfernt wird, wobei das Fleisch durch die Fischmembran über der Bauchhöhle geschützt bleibt. Die erfindungsgemäße Flüssigkeits-Hochdruckreinigung erfolgt zeitlich relativ kurz, örtlich konzentriert und begrenzt. Infolgedessen werden aufgrund der Maßnahme, daß die Hochdruckflüssigkeitsstrahl-Reinigung vor dem Heraustrennen der im Bauchhöhlenbereich liegenden Hauptgräte durchgeführt wird, einerseits freiliegende Blutreste mit Flüssigkeitsmittel, das an lokaler definierter Stelle intensiv aufgebracht wird, praktisch restlos entfernt, und andererseits bleibt das Fischfleisch trotz dieser intensiven maschinellen Reinigung unverletzt. Allein durch das erfindungsgemäße Entfernen von kopfseitig freiliegenden Nackenblutresten erreicht man eine erhebliche Einsparung von Personal und Kosten durch Vermeidung herkömmlich manuell durchzuführender aufwendiger Bürstenreinigung. Die erfindungsgemäße Hochdruckflüssigkeitsstrahl-Reinigungseinrichtung läßt sich nicht nur mit hoher Geschwindigkeit betreiben, sondern sie baut auch einfach und platzsparend. Im ganzen sind dadurch wesentliche Vorteile zum Bearbeiten von geköpftem und entweidetem Weißfisch, dessen Hauptgräte nur im Bauchhöhlenbereich zu entfernen ist, erreicht.

Zweckmäßig kann zunächst der zu bearbeitende Fisch im Schwanzbereich seitlich der Hauptgräte aufgeschnitten werden, bevor unmittelbar anschließend mittels der Hochdruckflüssigkeitsstrahl-Reinigung die freiliegenden Nackenblutreste entfernt werden.

Eine ganz besonders vorteilhafte ausgestaltende Maßnahme der Erfindung besteht darin, daß nach dem Heraustrennen der Hauptgräte schwanzseitig liegende Nackenblutreste mit fleischschonendem Mittel entfernt werden. Es handelt sich um eine Nachreinigung, da erfindungsgemäß mit dem Schritt der Hochdruckflüssigkeitstrahl-Reinigung bereits der größte Teil von Nackenblutresten entfernt worden ist. Es ist gefunden worden, daß nach dem Heraustrennen der im Bereich der Bauchhöhle liegenden Hauptgräte, also nach dem Öffnen der Fischmembran nur noch ein relativ geringer Teil des Nackenbluts, nämlich ca. 20% und weniger am dann offenen Fischfleisch zurückbleibt. Solche Reste können vorteilhaft mit besonders fleischschonendem Bürstenmittel, dessen Intensität weitgehend reduziert wird, abgenommen werden.

Ein ergänzender weiterer Verfahrensschritt kann vorteilhaft darin bestehen, daß, nachdem der zu bearbeitende Fisch im Schwanzbereich seitlich der Hauptgräte aufgeschnitten worden ist, ein an dem schwanzseitigen Ende der Bauchhöhle liegender Blutsackrest mit wenigstens einem auf diesen ausgerichteten Reinigungs-Hochdruckflüssigkeitsstrahl entfernt wird. Zweckmäßig kann zunächst die Hauptgräte im Bereich der Bauchhöhle herausgetrennt und der Blutsackrest nach dem Entfernen von Nackenblut entfernt werden.

Vorteilhaft kann an primär zu reinigender Blutstelle wenigstens ein Reinigungs-Hochdruckflüssigkeitsstrahl in Form eines Hochdruck-Wasserstrahls, vorteilhaft mit Strahldruck an der zu entfernenden Blutstelle von mindestens 50 bar, vorzugsweise mit 70 bis 100 bar, aufgebracht werden.

Um den Reinigungsbetrieb zu steuern, kann besonders vorteilhaft der Vorgang des Aufschneidens des Fisches im Schwanzbereich seitlich der Hauptgräte genutzt werden, wobei ein Fischgrößenwert zum gesteuerten Betrieb wenigstens eines Reinigungsschrittes gewonnen wird.

Um zu entfernende Nackenblutreste möglichst weitgehend der Hochdruckflüssigkeitsstrahl-Reinigung zugänglich zu machen, wird der Fisch zweckmäßig wenigstens an einer Stelle vor der Strahlreinigung in gegen seitliche Anlage gedrückter Position gefördert, um Nackenblutreste unter der Fischmembran hervorzudrücken.

Eine weitere vorteilhafte zusätzliche Verfahrensmaßnahme kann darin bestehen, daß der von Blutresten befreite Bereich des bearbeiteten Fisches mit Spülflüssigkeit, die fleischschonend mit geringem statischen Druck aufgebracht wird, gewaschen wird.

Zweckmäßig kann die Reinigungseinrichtung zum Entfernen von kopfseitigen Nackenblutresten wenigstens ein Paar jeweils einen Hochdruckflüssigkeitsstrahl hervorbringender Düsen aufweisen, wobei die Düsen zugeordnet auf seitlich der Hauptgräte und am kopfseitigen Ende der Fischmembran liegende, das Blut aufweisende Vertiefungen eines passierenden Fisches ausgerichtet sind.

Um vor der Reinigung den Fisch im Schwanzbereich aufzuschneiden, wird längs der Förderstrecke in Fischlaufrichtung vor der zum Entfernen von kopfseitigen Nackenblutresten vorgesehenen Reinigungseinrichtung eine Einrichtung zum Aufschneiden des Schwanzbereiches des Fisches seitlich seiner Hauptgräte angeordnet.

Um auch anteilmäßig geringere Nackenblutreste, die nach dem Entgräten im Bereich der Fischbauchhöhle anfallen, maschinell zu entfernen, kann in Fischlaufrichtung nach der Entgrätungseinrichtung vorteilhaft eine Reinigungseinrichtung zum Entfernen von schwanzseitigen Nackenblutresten angeordnet werden. Eine solche Reinigungseinrichtung weist vorteilhaft ein fleischschonend mit den Blutstellen in Berührung bringbares, mechanische Abnehmerelemente aufweisendes Abnehmermittel auf. Dieses wird zweckmäßig durch wenigstens eine antreibbare Bürste, vorzugsweise in Form einer in Rotation-versetzbaren doppel-kegelförmigen Walzenbürste gebildet. Zweckmäßig kann der Bürste ein steuerbares Mittel zugeordnet werden, das sie beim Passieren der zu reinigenden Blutstellen in Reinigungseingriff mit denselben bringt. In bevorzugter erfindungsgemäßer Ausgestaltung wird als steuerbares Eingriffsmittel ein die Bürste nur zum Reinigen freigebendes, sie ansonsten abdeckendes, entsprechend lageveränderbares Abdeckelement vorgesehen. Vorteilhaft kann das Bürsten-Eingriffsmittel ein Bewegungsmittel aufweisen, durch das die Bürste insbesondere mit einstellbarer Druckkraft gegen die zu reinigenden Blutstellen bewegbar und von diesen entfernbar ist. Auch kann zweckmäßig die zum Entfernen von schwanzseitigen Nackenblutresten vorgesehene Reinigungseinrichtung ein steuerbares Mittel zum Andrücken des Fisches gegen das Abnehmermittel im Bereich der zu reinigenden Blutstellen umfassen.

In Weiterbildung der erfindungsgemäßen Vorrichtung kann an der Förderstrecke eine Hochdruckflüssigkeitsstrahl-Einrichtung zum Entfernen von an dem schwanzseitigen Ende der Bauchhöhle liegendem Blutsackrest angeordnet werden. Zweckmäßig und vorteilhaft wird diese Reinigungseinrichtung längs der Förderstrecke in Fischlaufrichtung hinter der Entgrätungseinrichtung angeordnet.

Um Düsen einer erfindungsgemäßen Reinigungseinrichtung besonders raumsparend und einfach anzuordnen, wird in erfindungsgemäßer Ausgestaltung wenigstens ein Überleitkörper mit wenigstens einem Durchgang für den Durchtritt von Reinigungsflüssigkeit, die von wenigstens einer Düse abgestrahlt wird, vorgesehen, wobei der Überleitkörper vorzugsweise eine nach oben weisende Anlagefläche zur bauchseitigen Fischauflage aufweist.

Um von Blutresten bereits im wesentlichen befreite Stellen zum Entfernen von Reinigungsresten zu behandeln, kann in Fischlaufrichtung hinter wenigstens einer Blutreste primär entfernenden Reinigungseinrichtung eine weitere Reinigungseinrichtung in Form einer Spüleinrichtung zum Waschen der zu reinigenden Blutstellen angeordnet werden. Die Spüleinrichtung weist vorzugsweise wenigstens eine Spülflüssigkeit, insbesondere Wasser, unter geringem statischem Druck abgebende Spüldüse auf.

Vorteilhaft kann längs der Förderstrecke in Fischlaufrichtung vor der zum Entfernen von kopfseitigen Nackenblutresten vorgesehenen Reinigungseinrichtung eine Einrichtung zum Aufschneiden des Schwanzbereichs des Fisches seitlich seiner Hauptgräte angeordnet sein, wobei der Schneideinrichtung eine Meßeinrichtung mit zugeordnetem Förderweg zur Fischlängenmessung, die zur Betriebssteuerung wenigstens eines Blutreste entfernenden Reinigungsmittels vorgesehen ist, vorgeordnet ist.

Unteransprüche sind auf die genannten und noch andere zweckmäßige und vorteilhafte Ausgestaltungen der Erfindung gerichtet. Besonders zweckmäßige und vorteilhafte Ausbildungsformen oder -möglichkeiten der Erfindung werden anhand der folgenden Beschreibung der in der schematischen Zeichnung dargestellten Ausführungsbeispiele näher beschrieben. Es zeigen:
- Fig. 1: in Längsseitenansicht eine erfindungsgemäße Vorrichtung mit Reinigungsstationen,
- Fig. 2: in detaillierter Seitenansicht der Vorrichtung gemäß Fig. 1 dem Schwanzbereich des Fisches zugeordnete Schneideinrichtung und dieser nachgeordnete Reinigungseinrichtung,
- Fig. 3A und 3B: einen geköpften und entweideten Weißfisch vor der Bearbeitung in Unteransicht und Schnittansicht,
- Fig. 4A und 4B: in Unteransicht und Schnittansicht den Fisch gemäß Fig. 3 nach Aufschneiden im Schwanzbereich und mit geschlossener Membran in Position zur Entfernung von freiliegenden kopfseitigen Nackenblutresten,
- Fig. 5A, 5B und 5C: in Unter-, Längs- und Queransicht den Fisch gemäß Fig. 4 nach dem Entgräten im Bereich seiner Bauchhöhle und in Position einer erfindungsgemäßen Bürstenreinigung zum Entfernen von schwanzseitigen Nackenblutresten und
- Fig. 6: in Unteransicht den im Bauchhöhlenbereich entgräteten, von Nackenblutresten befreiten Fisch mit freiliegendem Blutsackrest in Position zur Hochdruckflüssigkeitsstrahl-Reinigung.

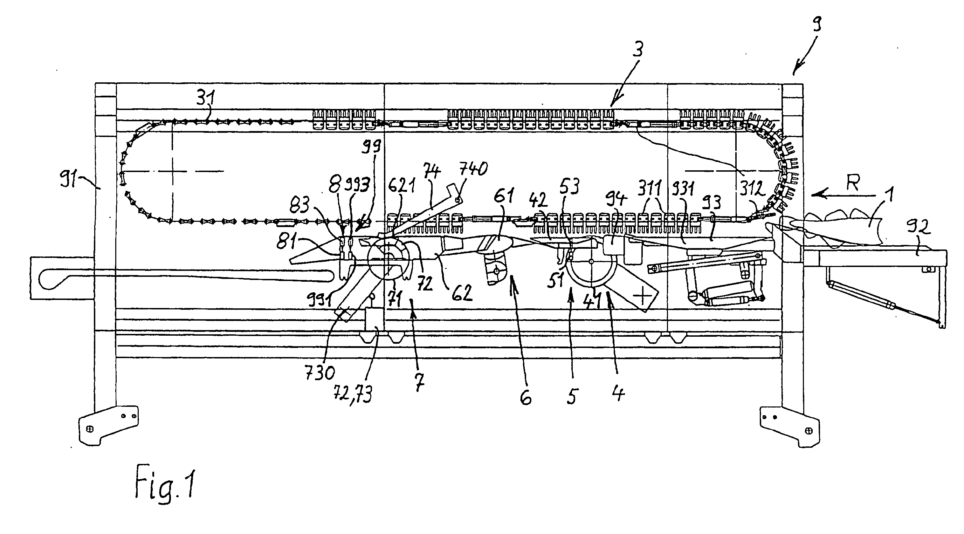

Eine zum Durchführen des erfindungsgemäßen Verfahrens vorgesehene erfindungsgemäße Vorrichtung 9, wie sie aus Fig. 1 ersichtlich ist, umfaßt in an sich bekannter Weise ein Gestell 91 mit einer Schneideinrichtung 4 und dieser nachgeordneter Entgrätungseinrichtung 6. Ein Tisch 92 ist vorgesehen, über den die Vorrichtung 9 in Aufeinanderfolge mit zu bearbeitenden Weißfischen 1 beschickt wird. Eine Fördereinrichtung 3 umfaßt in Reihenanordnung Gruppen von endlos umlaufend geführten und mittels Förderkette 31 getriebenen Mitnehmerelementen 311 zum Transport der Fische 1 in Fischlaufrichtung R längs der Förderstrecke der Vorrichtung 9. Jeder Fisch 1 wird mittels Schwanzklammer 312 erfaßt und mit seinem Schwanz voraus gefördert.

Längs der Förderstrecke ist zwischen der Schneideinrichtung 4 und der Entgrätungseinrichtung 6 eine erfindungsgemäße erste Hochdruckflüssigkeitstrahl-Reinigungseinrichtung 5 angeordnet. In Fischlaufrichtung R hinter der Entgrätungseinrichtung 6 befindet sich eine erfindungsgemäße Bürsten-Reinigungseinrichtung 7. Dieser ist eine erfindungsgemäße Spüleinrichtung 99 nachgeordnet, und dieser wiederum folgt, in Fischlaufrichtung R, eine erfindungsgemäße zweite Hochdruckflüssigkeitsstrahl-Reinigungseinrichtung 8.

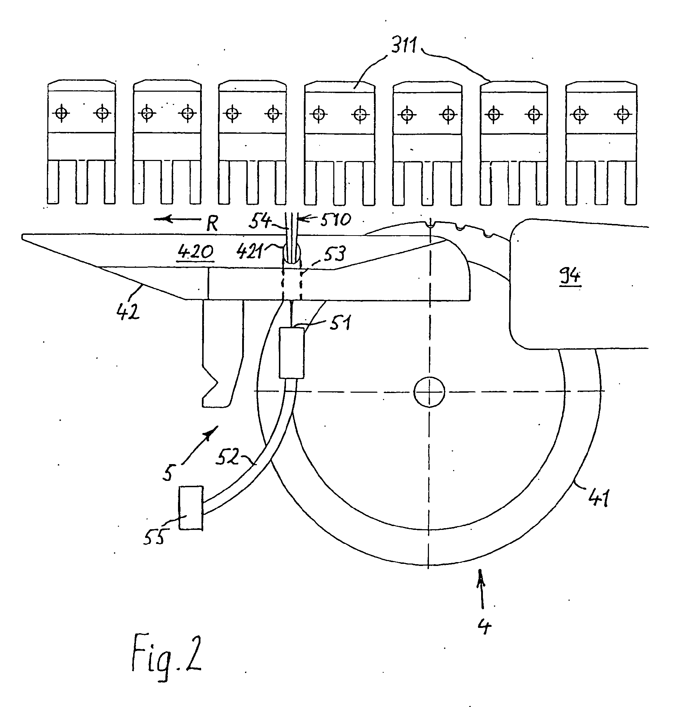

Wie aus Fig. 1 und 2 hervorgeht, sind am Eingang der Schneideinrichtung 4 übliche Leitkörper 93, 94 vorgesehen, über die der Fisch 1 an ein Schnitt-Kreismesser 41 der Schneideinrichtung 4 gebracht wird.

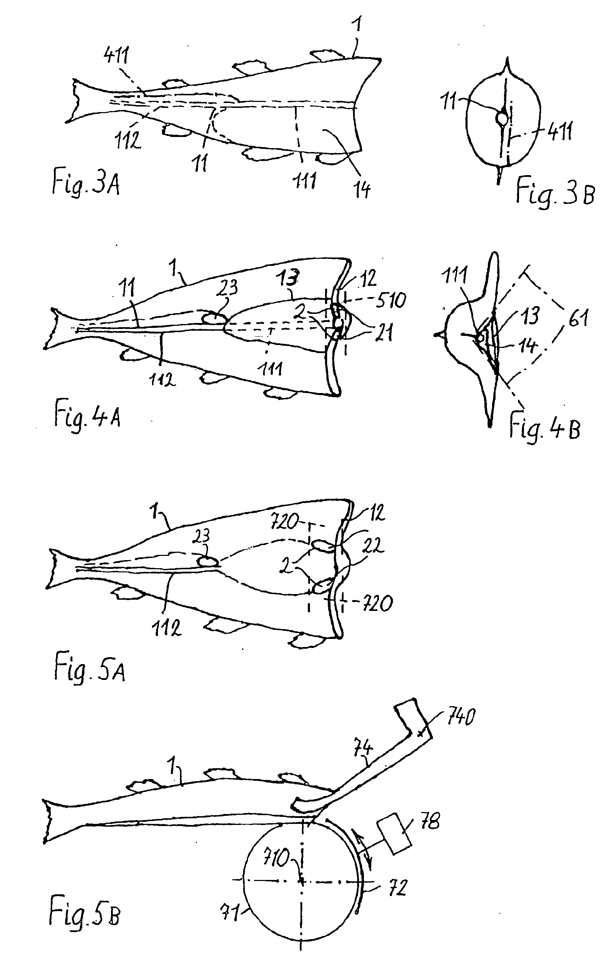

Bei jedem zu bearbeitenden Weißfisch 1 handelt es sich um einen von Kopf und Eingeweide befreiten, noch mit Hauptgräte 11 versehenen Fischrumpf. Dieser wird in Fig. 3A und 3B dargestellt. Wie zum Herstellen von Salzfisch aus Weißfisch üblich, wird der Fisch 1 im Schwanzbereich seitlich der Hauptgräte 11 von unten bis über die Hauptgräte 11 mittels der Schneideinrichtung 4 und dem entsprechend vertikal ausgerichteten Messer 41 aufgeschnitten. Die Schnittlinie 411 ist strichpunktiert aus Fig. 3A und 3B ersichtlich. Es entsteht das in Fig. 4A und 4B dargestellte, über einen Leitkörper 42 der Einrichtung-4 geführte Produkt. Dieses ist mit zum Kopfende des Fisches 1 freiliegenden Blutresten 21 behaftet, die links und rechts seitlich der Hauptgräte 111 in durch Vertiefungen gebildete Stellen 2 im Bereich des Kragenknochens 12 liegen. Diese Blutstellen 2 entstehen beim Durchtrennen seitlicher Blutnieren am Kopf des Fisches.

Es können Mittel vorgesehen werden, um ein Hervortreten von Blut unter der Membran 13 zu begünstigen. Zweckmäßig kann der Leitkörper 93 am Anfang der Förderstrecke mit seitlichen Flankenflächen 931 so ausgeformt und/oder mit hervorstehenden Elementen versehen werden, daß seitliche Anlagen ausgebildet sind, die an den außenliegenden Bauchlappen des Fisches 1 unter Förderdruck auf die Blutstellen einwirken, um Nackenblutreste 21 unter der Fischmembran 13 zusätzlich hervorzudrücken.

Erfindungsgemäß werden die kopfseitig freiliegenden Nackenblutreste 21 vor dem Heraustrennen der im Bereich der Bauchhöhle 14 liegenden Hauptgräte 111 mit auf die Nackenblutreste 21 ausgerichteten Hochdruck-Wasserstrahlen 54 entfernt (Fig. 2). Wie aus Fig. 4A und 4B ersichtlich, erfassen die Hochdruck-Wasserstrahlen 54 einen die kopfseitigen Nackenblutreste 21 einschließenden Arbeitsbereich 510. Da die Hauptgräte des Bauchhöhlenbereichs noch nicht herausgetrennt worden ist, bleibt das Fischfleisch durch die die Hauptgräte 111 bauchseitig überspannende Fischmembran 13 vor der Wasserstrahlreinigung geschützt.

Aus Fig. 2 sind wesentliche Teile der ersten Wasserstrahl-Reinigungseinrichtung 5 im Detail ersichtlich. Der Überleitkörper 42 weist einen firstdach-förmigen Profilquerschnitt auf. In jeder seitlichen Firstfläche 420 befindet sich eine Öffnung 421, aus der Wasser mit hohem Druck, nämlich mit vorteilhaft 70 bis 100 bar nach oben in den Arbeitsbereich 510 abstrahlt. Die Öffnungen 421 entstehen durch ein Paar vertikal gerichteter Durchgangslöcher 53 in dem Leitkörper 42. Unterhalb des Körpers 42 ist ein Paar Hochdruck-Wasserstrahldüsen 51 angeordnet, die jeweils über einen Schlauch 52 mit Wasser beaufschlagt werden und auf das zugehörige Durchgangsloch 53 ausgerichtet sind.

Wie man insbesondere aus Fig. 2 erkennt, liegen die beiden an den Firstflächen 420 erzeugten Wasserstrahlen 54 noch im Bereich des Schnittmessers 4, so daß die Reinigung zeitlich und räumlich kurz und unmittelbar im Anschluß an den Schnitt in der Schneideinrichtung 4 erfolgt. Insbesondere kann-es zweckmäßig sein, die Hochdruck-Wasserstrahlreinigung noch vor dem Ende des Schnitts 411 zu beginnen. Wie in Fischbearbeitungsvorrichtungen und -maschinen üblich, werden die auf den Fisch wirkenden Aggregate in Abhängigkeit von der Länge des in die Vorrichtung eingeförderten Fisches 1 gesteuert. Zu diesem Zweck wird die Länge jedes Fisches 1 gemessen. Zweckmäßig erfolgt die Längenmessung in an sich bekannter Weise im Bereich vor der Schneideinrichtung 4. Der zum Schnitt des Fisches 1 herangezogene Längenwert kann dann zweckmäßig auch zur Steuerung der Wasserstrahldüsen 51 genutzt werden. Insbesondere werden die Wasserstrahlen 54 über Magnetventile 55 mittels eines üblichen, nicht dargestellten Rechners fisch-längenabhängig gesteuert. Von Bedeutung ist, daß die Wasserstrahlen beim Passieren der Stellen 2 der Blutreste 21 zeitlich relativ kurz und mit hoher Intensität hervorgebracht werden.

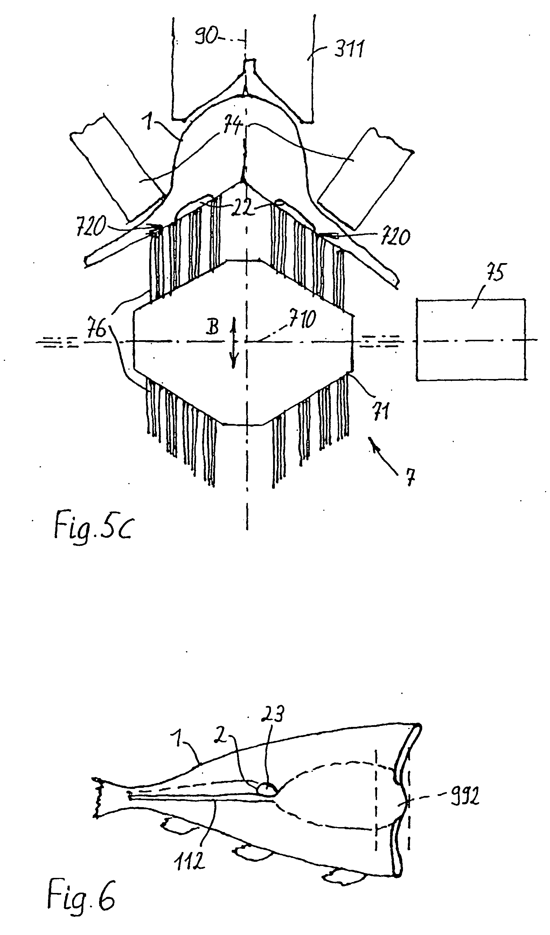

Erfindungsgemäß wird die im Bereich der Bauchhöhle 14 liegende Hauptgräte 111 mittels der Entgrätungseinrichtung 6 erst nach der Reinigung in der Einrichtung 5 entfernt. Die Entgrätungseinrichtung 6 umfaßt in üblicher Anordnung und Ausbildung ein Paar Kreismesser 61, die in Fig. 4B mit strichpunktierter Linie angedeutet werden. Sie sind entsprechend den Flankengräten der Bauchhöhle 14 im Winkel zueinander ausgerichtet. Während der Teil 112 der Hauptgräte 11 im Schwanzbereich des Fisches 1 bleibt, wird der Teil 111 der Hauptgräte 11 im Bereich der Bauchhöhle 14 zusammen mit der Membran 13 und der unter dem Hauptgrätenteil 111 liegenden Blutniere aus dem Fisch 1 herausgeschnitten. Dadurch werden, wie aus Fig. 5A ersichtlich, an den Stellen 2 zum Schwanzende des Fisches 1 hin liegende Nackenblutreste 22 der am Kopf des Fisches 1 durchtrennten seitlichen Blutnieren frei. Diese Blutreste 22 weisen einen deutlich geringeren Anteil als die bereits entfernten kopfseitigen Blutreste 21 auf, und sie werden nun erfindungsgemäß mit einem fleischschonendem Reinigungsmittel entfernt. Zu diesem Zweck ist im Ausführungsbeispiel die Bürsten-Reinigungseinrichtung 7 vorgesehen, die mit wesentlichen Elementen aus Fig. 5B und 5C näher hervorgeht.

Die Einrichtung 7 umfaßt eine im Längsquerschnitt doppel-kegelförmige Walzenbürste 71, die um eine Achse 710 in Verbindung mit einem Drehantrieb 75 drehbar gelagert ist. Die Achse 710 ist senkrecht zu einer gedachten Symmetrie-Förderebene 90 gerichtet, in der die Mitnehmer 311 der Fördereinrichtung 3 umlaufen. Borsten 76 enden entsprechend der stumpfwinkligen Form und Führung des Fisches 1 an seiner Unterseite mit kegelförmig schräger Bürsten-Abnehmfläche, so daß sie in angepaßter Form im Arbeitsbereich 720 schonend in Bürsteneingriff mit den an den Stellen 2 liegenden schwanzseitigen Blutresten 22 gelangen, wenn der Fisch 1 die Bürste 71 zur Reinigung passiert.

Mittels Schwanzklammer wird der Fisch 1 mit dem Schwanzende voraus durch die Einrichtung 7 gezogen. Diese umfaßt eine ein gesteuertes Eingriffsmittel bildende, aus Fig. 5B ersichtliche Bürstenabdeckung 72, die ein der Bürsten-Kegelform entsprechendes Mantelsegment aufweist, das um die Walzenachse 710 mittels Steuerung hin und her schwenkbar in Abhängigkeit von dem Passieren der Blutreste 22 ist. In Fig. 5B ist die Abdeckung 72 in die Borsten 76 zum Reinigen der Blutstellen 2 freigebender Position dargestellt. Außerhalb der Reinigungsphase ist die Abdeckung 72 unter den Fisch 1 geschwenkt. Sie bildet eine Leitfläche, die ein Bürstenfenster 621 in einem Leitkörper 62 schließt, der den Fisch 1 aus der Entgrätungseinrichtung 6 übernimmt.

Wie aus Fig. 1 ersichtlich, ist die Bürste 71 über einen Arm um eine zur Walzenachse 710 parallele Achse 730 derart schwenkbar gelagert und angeordnet, daß die Bürste 71 zur Unterseite des Fisches 1 hin bzw. davon weg schwenkbar ist, sie also in Richtung B anhebbar und absenkbar ist. Diese Bewegung zum Bürsteneingriff wird in Korrespondenz und Verbindung mit der Bewegung der Abdeckung 72 gesteuert, und zwar in Abhängigkeit von dem Auftreten und dem Vorbeigang der von den Blutresten 22 zu reinigenden Stellen 2. Zweckmäßig werden pneumatische Steuerungsmittel 73 und 78 vorgesehen, die mit üblicher Fischmaschinen-Steuerung verbunden sind.

Wie man aus Fig. 1, 5B und 5C erkennt, weist die Bürsten-Reinigungseinrichtung 7 Andrückmittel in Form von im Paar von oben seitlich an dem Fisch 1 angreifenden Niederhaltern 74 auf, die um eine zur Bürsten-Walzenachse 710 parallele Achse 740 schwenkbewegbar angeordnet sind. Die Schwenkbewegung dieser Niederhalter 74 wird im Takt der Fischbearbeitungsmaschine 9 gesteuert, und zwar derart, daß sie das Ausweichen des Fisches 1 nach oben verhindern, wenn die Abdeckung 72 weggeschwenkt und die Bürste 71 hochgeschwenkt wird.

Wie aus Fig. 1 ersichtlich, weist der Leitkörper 62, der das mit der Abdeckung 72 verschließbare Bürstenfenster 621 aufweist, eine der Bürste 71 räumlich und in zeitlichem Betrieb unmittelbar nachfolgende Wasser-Spüleinrichtung 99 auf. Diese ist durch eine Mehrzahl von Wasserdüsen 991 sowie Durchgängen 993 gebildet, die insoweit in der gleichen Weise vorgesehen und angeordnet sind, wie die entsprechenden Elemente der Reinigungseinrichtung 5. Ein wesentlicher Unterschied besteht allerdings darin, daß die Düsen 991 und die zugehörigen Durchgänge 993 zweckmäßig in größerer Zahl, zum Beispiel vierfach vorgesehen werden und die Wasser-Strahlkraft nur so groß ist, daß im aus Fig. 6 ersichtlichen Arbeitsbereich 992, nämlich im Bereich der mit primärer Reinigung in den Stationen 5 und 7 bereits gereinigten Blutstellen 2, nur noch eine abschließende Reinigungsspülung mit niedrigem Wasserdruck erfolgt.

Zum Realisieren eines weiteren erfindungsgemäßen Verfahrensschrittes ist an dem Leitkörper 62 unmittelbar räumlich hinter der Spüleinrichtung 99 eine zweite Hochdruckflüssigkeitstrahl-Reinigungseinrichtung 8 vorgesehen, die mit Wasser betrieben wird. Diese Einrichtung weist wenigstens eine Düse 81 mit über dieser in dem Leitkörper 62 angeordnetem zugeordnetem Durchgang 83 auf. In der Einrichtung 8 wird ein gesteuerter, unter Hochdruck stehender Wasserstrahl auf eine weitere Blutstelle 2 ausgerichtet, an der nämlich ein Blutsackrest 23 am schwanzseitigen Ende der Bauchhöhle 14 liegt, wie dies aus Fig. 4A, 5A und 6 ersichtlich ist. Es ist von Bedeutung, daß diese Wasserstrahl-Hochdruckreinigung erst erfolgt, wenn die im Bereich der Bauchhöhle 13 liegende Hauptgräte 111 mittels der Entgrätungseinrichtung 6 entfernt worden ist, da der Blutsack am Ende der dann weggeschnittenen Blutniere frei zu liegen kommt. Im Ausführungsbeispiel wird der Blutsackrest 23 nach dem vollständigen Entfernen von Nackenblut entfernt. Es kann aber z.B. auch zweckmäßig sein, die Einrichtung 8 zwischen der Einrichtung 6 und der Einrichtung 7 anzuordnen. Wie bei den anderen Reinigungseinrichtungen erfolgt eine Wasserstrahlsteuerung, z.B. mittels Magnetventil, in Abhängigkeit von dem Auftreten und Passieren des Blutsackrestes 23 an der Reinigungseinrichtung 8. Zu diesem Zweck sind das oder die Ventile zur Wasserstrahlsteuerung mit dem üblichen Betriebs-Steuerungsrechner einer Fischbearbeitungsmaschine verbunden.

## Patentansprüche

1. Verfahren zum gesteuerten maschinellen Bearbeiten von geköpftem und entweidetem Weißfisch (1), insbesondere zum Herstellen von Salzfisch, wobei die Hauptgräte (111) im Bereich der Bauchhöhle (14) herausgetrennt wird, **dadurch gekennzeichnet , daß** kopfseitig freiliegende Nackenblutreste (21) von durchtrennten seitlichen Blutnieren des mit Hauptgräte (111) versehenen, zu bearbeitenden Fischrumpfes mit wenigstens einem auf die freiliegenden Nackenblutreste (21) ausgerichteten Reinigungs-Hochdruckflüssigkeitsstrahl (54) derart entfernt werden, daß das Fischfleisch durch die die Hauptgräte (111) bauchseitig überspannende Fischmembran (13) vor dem Hocbdxucscflüssigkeitsstrahl (54) geschützt bleibt, und daß anschließend die im Bereich der Bauchhöhle (14) liegende Hauptgräte (111) entfernt und damit die Fischmembran (13) geöffnet wird, wodurch schwanzseitig liegende Nackenblutreste (22) der am Kopf des Fisches (1) durchtrennten seitlichen Blutnieren frei werden.

2. Verfahren nach Anspruch 1, **dadurch gekennzeichnet, daß** der zu bearbeitende Fisch (1) im Schwanzbereich seitlich der Hauptgräte (11) aufgeschnitten wird, anschließend mittels der Hochdruckflüssigkeitsstrahl-Reinigung die freiliegenden Nackenblutreste (21) entfernt werden und dann die Hauptgräte (111) im Bereich der Bauchhöhle (14) herausgetrennt wird.

3. VerfahtennachAnspruch 1 oder 2, **dadurch gekennzeichnet, daß** nach dem Heraustrennen der im Bereich der Bauchhöhle (14) liegenden Hauptgräte (111) schwanzseitig liegende Nackenblutreste (22) mit fleischschonendem Reinigungsmittel (71) entfernt werden.

4. Verfahren nach Anspruch 3, **dadurch gekennzeichnet, daß** die schwanzseitig liegenden Nackenblutreste (22) mit gesteuertem Bürstenmittel (71) abgenommen werden,

5. Verfahren nach einem der Ansprüche 1 bis 4, **dadurch gekennzeichnet, daß** der zu bearbeitende Fisch (1) im Schwanzbereich seitlich der Hauptgräte (11) aufgeschnitten wird und ein an dem schwanzseitigen Ende der BauchhöMe (14) liegender Blutsackrest (23) mit wenigstens einem auf diesen ausgerichteten Reinigungs-Hochdruckf1üssigkeitsstrahl entfernt wird.

6. Verfahren nach Anspruch 5, **dadurch gekennzeichnet, daß** der Blutsackrest (23) nach dem Heraustrennen der im Bereich der Bauchhöhle (14) liegenden Hauptgräte (111) entfernt wird, wobei er vorzugsweise nach dem Entfernen von Nackenblut (21, 22) entfernt wird.

7. Verfahren nach einem der Ansprüche 1 bis 6, **dadurch gekennzeichnet, daß** an zu reinigender Blutstelle (2) wenigstens ein Reinigungs-Hochdruckflüssigkeitsstram (54) in Form eines Hochdruck-Wasserstrahls, vorteilhaft mit Strahldruck an der zu entfernenden Blutstelle (2) in der Größenordnung von mindestens 50 bar, vorzugsweise mit 70 bis 100 bar, aufgebracht wird.

8. Verfahren nach einem der Ansprüche 1 bis 7, **dadurch gekennzeichnet, daß** der von Nackenblutresten (21, 22) befreite Bereich des bearbeiteten Fisches (1) mit Flüssigkeit, die fleischschonend mit geringem statischem Druck aufgebracht wird, gewaschen wird.

9. Verfahren nach einem der Ansprüche 1 bis 8, **dadurch gekennzeichnet, daß** der Fisch (1) wenigstens an einer Stelle vor der freiliegende Nackenblutreste (21) entfernenden Hochdruckflüssigkeitsstrahl-Reinigung in gegen eine Anlage (42) gedrückter Position gefördert wird, um Nackenblutreste (21) unter der Fischmembran (13) hervorzudrücken.

10. Verfahren nach einem der Ansprüche 1 bis 9, **dadurch gekennzeichnet, daß** der zu bearbeitende Fisch (1) mit seinem Schwanz voraus gefördert wird.

11. Verfahren nach einem der Ansprüche 1 bis 10, **dadurch gekennzeichnet, daß** der zu bearbeitende Fisch (1) im Schwanzbereich seitlich der Hauptgräte (11) aufgeschnitten und wenigstens ein Fischgrößenwert zum gesteuerten Betrieb der Hochdruckflüssigkeitsstrahl-Relnigung in Verbindung mit dem Vorgang des Aufschneidens des Fisches (1) gewonnen wird.

12. Vorrichtung zum Bearbeiten von geköpftem und entweidetem Weißfisch zum Durchführen des Verfahrens nach einem der Ansprüche 1 bis 11, umfassend eine eine Förderstrecke bestimmende Fördereinrichtung (3) zum Fördern des zu bearbeitenden Fisches (I) in Mehrzahl und eine an der Förderstrecke angeordnete Entgrätungseinrichtung (6) zum Heraustrennen der Hauptgräte (111) im Bereich der Bauchhöhle (14), **dadurch gekennzeichnet, daß** längs der Förderstrecke in Fischlauftichtung (R) vor der Entgrätungseinrichtung (6) eine Hochdruckflüssigkeitsstrahl-Reinipungseiraichtung (5) zum Entfernen von kopfseitig freiliegenden Nackenblutresten (21) von durchtrennten seitlichen Blutnieren des mit Hauptgräte (111) versehenen, zu bearbeitenden Fischrumpfes so angeordnet und ausgebildet ist, daß wenigstens ein von der Reinigungseinrichtung (5) abgestrahlter Reinigungs-Hochdruekflüssigkeitsstrahl (54) auf die freiliegenden Nackenblutreste (21) derart ausgerichtet ist, daß das Fischfleisch durch die die Hauptgräte (111) bauchseitig überspannende Fischmembran (13) vor dem Hochdxückflüssigkeitsstrahl (54) geschützt bleibt.

13. Vorrichtung nach Anspruch 12, **dadurch gekennzeichnet, daß** die Reinigungseinrichtung (5) zum Entfernen von kopfseitigen Nackenblutresten (21) wenigstens ein Paar jeweils einen Hochdruckflüssigkeitsstrahl (54) hervorbringender Düsen (51) aufweist, wobei die Düsen (51) zugeordnet auf seitlich der Hauptgräte (11) und am kopfseitigen Ende der Fischmembran (13) liegende, das Blut aufweisende Vertiefungen eines passierenden Fisches (1) ausgerichtet sind.

14. Vorrichtung nach Anspruch 12 oder 13, **dadurch gekennzeichnet, daß** längs der Förderstrecke in Fischlaufrichtung (R) vor der zum Entfernen von kopfseitigen Nackenblutresten (21) vorgesehenen Reinigungseinrichtung (5) eine Einrichtung (4) zum Aufschneiden des Schwanzbereichs des Fisches (1) seitlich seiner Hauptgräte (11) angeordnet ist.

15. Vorrichtung nach einem der Ansprüche 12 bis 14, **dadurch gekennzeichnet, daß** längs der Förderstrecke in Fischlaufrichtung (R) nach der Entgrätungseinrichtung (6) eine Reinigungseinrichtung (7) zum Entfernen von schwanzseitigen Nackenblutresten (22) angeordnet ist.

16. Vorrichtung nach Anspruch 15, **dadurch gekennzeichnet, daß** die zum Entfernen von schwanzseitigen Nackenblutresten (22) vorgesehene Reinigungseinrichtung (7) ein fleischschonend mit den Blutstellen (2) in Berührung bringbares, mechanische Abnehmerelemente aufweisendes Abnehmermittel (71) umfaßt.

17. Vorrichtung nach Anspruch 16, **dadurch gekennzeichnet, daß** das Abnehmermittel wenigstens eine antreibbare Bürste (71), vorzugsweise in Form einer versetzbaren doppel-kegelförmigen Walzenbürste, aufweist.

18. Vorrichtung nach Anspruch 17, **dadurch gekennzeichnet, daß** der Bürste (71) ein steuerbares Mittel (72) zugeordnet ist, das sie nur beim Passieren der zu reinigenden Blutstellen (2) in Reinigungseingriff mit denselben bringt.

19. Vorrichtung nach Anspruch 17, **dadurch gekennzeichnet, daß** das steuerbare Eingriffsmittel (72) ein die Bürste (71) nur zum Reinigen feigebendes, sie ansonsten abdeckendes, entsprechend lageveränderbares Abdeckelement umfaßt.

20. Vorrichtung nach Anspruch 18 oder 19, **dadurch gekennzeichnet, daß** das Bürsten-Eingriffsmittel (72) ein Bewegungsmittel (73) aufweist, durch das die Bürste (71) gegen die zu reinigenden Blutstellen (2) bewegbar und von diesen entfernbar ist.

21. Vorrichtung nach einem der Ansprüche 16 bis 20, **dadurch gekennzeichnet daß** die zum Entfernen von schwanzseitigen Nackenblutrresten (22) vorgesehene Reinigungseinrichtung (7) ein steuerbares Mittel (74) zum Andrücken des Fisches (1) gegen das Abnehmermittel (71) im Bereich der zu reinigenden Blutstellen (2) umfaßt.

22. Vorrichtung nach einem der Ansprüche 12 bis 21, **dadurch gekennzeichnet, daß** an der Förderstrecke eine Hochdruckflüssigkeitsstrahl-Einrichtung (8) zum Entfernen von an dem schwanzseitigen Ende der Bauchhöhle liegendem Blutsackrest (23) angeordnet ist.

23. Vorrichtung nach Anspruch 21, **dadurch gekennzeichnet, daß** die zum Entfernen des Blutsackrestes (23) vorgesehene Reinigungseinrichtung (8) längs der Förderstrecke in Fischlaufrichtung (R) hinter der Entgrätungseinricbtung (6) angeordnet ist.

24. Vorrichtung nach einem der Ansprüche 12 bis 23, **dadurch gekennzeichnet, daß** wenigstens eine Reinigungseinrichtung (5; 8; 99) an wenigstens einem Überleitkörper (42, 62) einer vorgeordneten Station (4, 6) angeordnet ist, wobei der Überleitkörper (42, 62) wenigstens einen Durchgang (53; 83; 993) für den Durchtritt von Reinigungsflüssigkeit aufweist, die von wenigstens einer Düse (51; 81; 991) abgestrahlt wird, wobei der Überleitkörper (42, 62) vorzugsweise eine nach oben weisende Anlagefläche (420) zur bauchseitigen Fischauflage aufweist.

25. Vorrichtung nach einem der Ansprüche 12 bis 24, **dadurch gekennzeichnet, daß** in Fischlaufrichtung (R) hinter wenigstens einer Blutreste (21, 22, 23) entfernenden Reinigungseinrichtung (5, 7) eine weitere Reinigungseinrichtung in Form einer Spüleinrichtung (99) zum Waschen der Blutstellen (2) angeordnet ist, wobei die Spüleinrichtung (99) vorzugsweise wenigstens eine Spülflüssigkeit, insbesondere Wasser, unter geringem statischem Druck abgebende Spüldüse (991) aufweist.

26. Vorrichtung nach einem der Ansprüche 12 bis 25, **dadurch gekennzeichnet, daß** längs der Förderstrecke in Fischlaufrichtung (R) vor der zum Entfernen von kopfseitigen Nackenblutresten (21) vorgesehenen Reinigungseinrichtung (5) eine Einrichtung (4) zum Aufschneiden des Schwanzbereichs des Fisches (I) seitlich seiner Hauptgräte (11) angeordnet ist, wobei der Schneideinrichtung (4) eine Meßeinrichtung mit zugeordnetem Förderweg zur Fischlängenmessung, die zur Betriebssteuerung wenigstens einer Blutreste (2) entfernenden Reinigungseinrichtung (5, 7, 8, 99) vorgesehen ist, vorgeordnet ist.

## Claims

1. Process for controlled machine processing of headless and gutted white fish (1), in particular for producing salt fish, wherein the main bone (111) is separated out in the region of the abdominal cavity (14), **characterised in that** neck blood residues (21) exposed on the head side of cut lateral blood kidneys of the fish body to be processed and provided with main bone (111) are removed using at least one cleaning high-pressure liquid jet (54) aligned with the exposed neck blood residues (21), such that the fish flesh remains protected from the high-pressure liquid jet (54) by the fish membrane (13) spanning the main bone (111) on the abdomen side, and **in that** the main bone (111) lying in the region of the abdominal cavity (14) is then removed and hence the fish membrane (13) is opened, as a result of which neck blood residues (22) of the lateral blood kidneys cut at the head of the fish (1) and lying on the tail side become free.

2. Process according to claim 1, **characterised in that** the fish (1) to be processed is sliced in the tail region laterally of the main bone (11), then the exposed neck blood residues (21) are removed by means of high-pressure liquid jet cleaning and then the main bone (111) is separated out in the region of the abdominal cavity (14).

3. Process according to claim 1 or 2, **characterised in that** after separating out the main bone (111) lying in the region of the abdominal cavity (14), neck blood residues (22) lying on the tail side are removed using cleaning means (71) which protect the flesh.

4. Process according to claim 3, **characterised in that** the neck blood residues (22) lying on the tail side are detached using controlled brush means (71).

5. Process according to one of claims 1 to 4, **characterised in that** the fish (1) to be processed is sliced in the tail region laterally of the main bone (11) and a blood sac residue (23) lying at the tail-side end of the abdominal cavity (14) is removed using at least one cleaning high-pressure liquid jet aligned with the latter.

6. Process according to claim 5, **characterised in that** the blood sac residue (23) is removed after separating out the main bone (111) lying in the region of the abdominal cavity (14), wherein it is preferably removed after removing neck blood (21, 22).

7. Process according to one of claims 1 to 6, **characterised in that** at least one cleaning high-pressure liquid jet (54) in the form of a high-pressure water jet, advantageously having jet pressure at the blood site (2) to be removed in the order of magnitude of at least 50 bar, preferably at 70 to 100 bar, is applied at blood site (2) to be cleaned.

8. Process according to one of claims 1 to 7, **characterised in that** the region of the processed fish (1) which is freed of neck blood residues (21, 22) is washed using liquid, which is applied at low static pressure in a manner which protects the flesh.

9. Process according to one of claims 1 to 8, **characterised in that** the fish (1) is conveyed in a position pressed against a support (42) at least at one site upstream of high-pressure liquid jet cleaning which removes the exposed neck blood residues (21) in order to press forward neck blood residues (21) below the fish membrane (13).

10. Process according to one of claims 1 to 9, **characterised in that** the fish (1) to be processed is conveyed with its tail in front.

11. Process according to one of claims 1 to 10, **characterised in that** the fish (1) to be processed is sliced in the tail region laterally of the main bone (11) and at least one fish size value is obtained for controlled operation of high-pressure liquid jet cleaning in conjunction with the process of slicing the fish (1).

12. Device for processing of headless and gutted white fish for carrying out the process according to one of claims 1 to 11, comprising a conveying device (3) determining a conveying path for conveying the fish (1) to be processed in plural and a filleting device (6) arranged on the conveying path for separating out the main bone (111) in the region of the abdominal cavity (14), **characterised in that** a high-pressure liquid jet cleaning device (5) for removing neck blood residues (21) exposed on the head side of cut lateral blood kidneys of the fish body to be processed and provided with main bone (111) is arranged and designed along the conveying path in the direction of fish travel (R) upstream of the filleting device (6), so that at least one cleaning high-pressure liquid jet (54) blasted from the cleaning device (5) is aligned with the exposed neck blood residues (21) such that the fish flesh remains protected from the high-pressure liquid jet (54) by the fish membrane (13) spanning the main bone (111) on the abdomen side.

13. Device according to claim 12, **characterised in that** the cleaning device (5) for removing head-side neck blood residues (21) has at least one pair of nozzles (51) producing in each case a high-pressure liquid jet (54), wherein the nozzles (51) are aligned assigned to depressions of a passing fish (1) having the blood and lying laterally of the main bone (11) and on the head-side end of the fish membrane (13).

14. Device according to claim 12 or 13, **characterised in that** a device (4) for slicing the tail region of the fish (1) laterally of its main bone (11) is arranged along the conveying path in the direction of fish travel (R) upstream of the cleaning device (5) provided for removing head-side neck blood residues (21).

15. Device according to one of claims 12 to 14, **characterised in that** a cleaning device (7) for removing tail-side neck blood residues (22) is arranged along the conveying path in the direction of fish travel (R) downstream of the filleting device (6).

16. Device according to claim 15, **characterised in that** the cleaning device (7) provided for removing tail-side neck blood residues (22) comprises a detaching means (71) having mechanical detaching elements and which can be contacted with the blood sites (2) in a manner which protects the flesh.

17. Device according to claim 16, **characterised in that** the detaching means has at least one drivable brush (71), preferably in the form of a movable double cone-like roller brush.

18. Device according to claim 17, **characterised in that** a controllable means (72), which brings the brush into cleaning engagement with the blood sites (2) to be cleaned only when passing the latter, is assigned to the brush (71).

19. Device according to claim 17, **characterised in that** the controllable engagement means (72) comprises a cover element, the position of which can be changed accordingly, which releases the brush (71) only for cleaning, otherwise which covers it.

20. Device according to claim 18 or 19, **characterised in that** the brush engagement means (72) has a movement means (73), by means of which the brush (71) can be moved against the blood sites (2) to be cleaned and can be removed from the latter.

21. Device according to one of claims 16 to 20, **characterised in that** the cleaning device (7) provided for removing tail-side neck blood residues (22) comprises a controllable means (74) for pressing the fish (1) against the detaching means (71) in the region of the blood sites (2) to be cleaned.

22. Device according to one of claims 12 to 21, **characterised in that** a high-pressure liquid jet device (8) for removing blood sac residue (23) lying at the tail-side end of the abdominal cavity is arranged on the conveying path.

23. Device according to claim 21, **characterised in that** the cleaning device (8) provided for removing the blood sac residue (23) is arranged along the conveying path in the direction of fish travel (R) behind the filleting device (6).

24. Device according to one of claims 12 to 23, **characterised in that** at least one cleaning device (5; 8; 99) is arranged on at least one transfer body (42, 62) of a pre-arranged station (4, 6), wherein the transfer body (42, 62) has at least one opening (53; 83; 993) for the passage of cleaning liquid, which is blasted from at least one nozzle (51; 81; 991), wherein the transfer body (42, 62) preferably has a support surface (420) pointing upwards for abdomen-side fish support.

25. Device according to one of claims 12 to 24, **characterised in that** a further cleaning device in the form of a rinsing device (99) for washing the blood sites (2) is arranged in the direction of fish travel (R) behind at least one cleaning device (5, 7) removing blood residues (21, 22, 23), wherein the rinsing device (99) preferably has at least one rinsing nozzle (991) releasing rinsing liquid, in particular water, under low static pressure.

26. Device according to one of claims 12 to 25, **characterised in that** a device (4) for slicing the tail region of the fish (1) laterally of its main bone (11) is arranged along the conveying path in the direction of fish travel (R) upstream of the cleaning device (5) provided for removing head-side neck blood residues (21), wherein a measuring device with assigned conveying path for fish length measurement, which is provided for operational control at least of a cleaning device (5, 7, 8, 99) which removes blood residues (2), is arranged before the cutting device (4).

## Revendications

1. Procédé de traitement commandé et mécanisé de poisson frais (1) dont on a retiré la tête et les arêtes, en vue notamment de fabriquer du poisson en saumure, l'arête principale (111) étant retirée dans la région abdominale (14), **caractérisé en ce que** du sang cervical résiduel (21) du côté de la tête provenant de reins latéraux séparés du tronc de poisson à traiter et doté de l'arête principale (111) est retiré avec au moins un jet de liquide de nettoyage à haute pression (54) dirigé vers le sang cervical résiduel (21) de telle sorte que la chair de poisson reste protégée du jet de liquide à haute pression (54) par la membrane (13) recouvrant l'arête principale (111) du côté de l'abdomen, et **en ce que** l'arête principale (111) se trouvant dans la région de l'abdomen (14) est ensuite retirée et la membrane (13) est ainsi ouverte de façon à libérer le sang cervical résiduel (22) se trouvant du côté de la queue et provenant des reins latéraux séparés au niveau de la tête du poisson (1).

2. Procédé selon la revendication 1, **caractérisé en ce que** le poisson (1) à traiter est découpé dans la région de la queue latéralement à l'arête principale (11), puis le sang cervical résiduel (21) libéré est éliminé par nettoyage au jet de liquide à haute pression et l'arête principale (111) est retirée dans la région de l'abdomen (14).

3. Procédé selon la revendication 1 ou 2, **caractérisé en ce que** le sang cervical résiduel (22) se trouvant du côté de la queue est éliminé par des moyens de nettoyage (71) ménageant la chair après avoir séparé l'arête principale (111) se trouvant dans la région de l'abdomen (14).

4. Procédé selon la revendication 3, **caractérisé en ce que** le sang cervical résiduel (22) se trouvant du côté de la queue est éliminé avec des moyens de brossage commandé (71).

5. Procédé selon l'une des revendications 1 à 4, **caractérisé en ce que** le poisson (1) à traiter est découpé dans la région de la queue latéralement à l'arête principale (11) et une poche de sang résiduel (23) se trouvant à l'extrémité de l'abdomen (14) côté queue est éliminée au moyen d'un jet de liquide de nettoyage à haute pression dirigé vers cette poche.

6. Procédé selon la revendication 5, **caractérisé en ce que** la poche de sang résiduel (23) est éliminée après avoir retiré l'arête principale (111) se trouvant dans la région de l'abdomen (14), la poche de sang résiduel étant éliminée avantageusement après avoir retiré le sang cervical (21, 22).

7. Procédé selon l'une des revendications 1 à 6, **caractérisé en ce que** l'on applique à un emplacement de sang à nettoyer (2) un jet de liquide de nettoyage à haute pression (54) se présentant sous la forme d'un jet d'eau à haute pression, avantageusement avec une pression de jet au niveau de l'emplacement de sang à éliminer (2) de l'ordre d'au moins 50 bars, avantageusement comprise entre 70 et 100 bars.

8. Procédé selon l'une des revendications 1 à 7, **caractérisé en ce que** la région du poisson traité (1), qui est dépourvue du sang cervical résiduel (21, 22), est lavée avec un liquide qui est appliqué, en ménageant la chair, avec une pression statique faible.

9. Procédé selon l'une des revendications 1 à 8, **caractérisé en ce que** le poisson (1) est transporté à une position en appui contre un support (42) à un emplacement situé en avant du nettoyage au jet de liquide à haute pression éliminant le sang cervical résiduel (21) afin d'expulser le sang cervical résiduel (21) sous la membrane (13).

10. Procédé selon l'une des revendications 1 à 1 9, **caractérisé en ce que** le poisson à traiter (1) est transporté avec sa queue placée en avant.

11. Procédé selon l'une des revendications 1 à 10, **caractérisé en ce que** le poisson à traiter (1) est découpé dans la région de la queue latéralement à l'arête principale (11) et **en ce que** l'on obtient une quantité de poisson pour le fonctionnement commandé du nettoyage par jet de liquide à haute pression en liaison avec le processus de découpe du poisson (1).

12. Dispositif de traitement de poisson frais, dont on a retiré la tête et les arêtes, pour la mise en oeuvre du procédé selon l'une des revendications 1 à 11, le dispositif comportant un dispositif de transport (3) définissant une section de transport multiple pour le transport du poisson à traiter (1) et un dispositif de retrait d'arête (6) qui est placé sur la section de transport et qui est destiné à retirer l'arête principale (111) dans la région de l'abdomen (14), **caractérisé en ce que** le dispositif de nettoyage par jet de liquide à haute pression (5) est placé et conformé le long de la section de transport en avant du dispositif de retrait d'arête (6) par référence au sens de défilement de poisson (R) afin d'éliminer le sang cervical résiduel (21) du côté de la tête provenant de reins latéraux séparés du tronc de poisson à traiter doté de l'arête principale (111) de sorte que au moins un jet de liquide de nettoyage à haute pression (54) projeté par le dispositif de nettoyage (5) est dirigé vers le sang cervical résiduel (21) libre de façon que la chair de poisson reste protégée du jet de liquide à haute pression (54) par la membrane (13) recouvrant du côté de l'abdomen l'arête principale (111).

13. Dispositif selon la revendication 12, **caractérisé en ce que** le dispositif de nettoyage (5) destiné à éliminer le sang cervical résiduel (21) du côté de la tête comporte au moins une paire de buses (51) délivrant chacune un jet de liquide à haute pression (54), les buses (51) étant dirigées en correspondance vers des cavités d'un poisson de passage (1) comportant le sang et placé latéralement à l'arête principale (11) et à l'extrémité de la membrane (13) du côté de la tête.

14. Dispositif selon la revendication 12 ou 13, **caractérisé en ce qu'**un dispositif (4) destiné à découper la région du poisson (1) se trouvant du côté de la queue, latéralement à son arête principale (11), le long de la section de transport en avant du dispositif de nettoyage (5), est destiné à éliminer le sang cervical résiduel (21) du côté de la tête, par référence au sens de défilement de poisson (R).

15. Dispositif selon l'une des revendications 12 à 14, **caractérisé en ce qu'**un dispositif de nettoyage (7) destiné à éliminer le sang cervical résiduel (22) se trouvant du côté de la queue est placé le long de la section de transport après le dispositif de retrait d'arête (6) par référence au sens de défilement de poisson (R).

16. Dispositif selon la revendication 15, **caractérisé en ce que** le dispositif de nettoyage (7), destiné à éliminer le sang cervical résiduel (22) se trouvant du côté de la queue, comporte un moyen d'enlèvement (71) pouvant être amené en contact avec les emplacements de sang (2) en ménageant la chair et comportant des éléments d'enlèvement mécaniques.

17. Dispositif selon la revendication 16, **caractérisé en ce que** le moyen d'enlèvement comporte au moins une brosse entraînable (71) se présentant avantageusement sous la forme d'une brosse cylindrique déplaçable en forme de double cône.

18. Dispositif selon la revendication 17, **caractérisé en ce qu'**il est associé à la brosse (71) un moyen commandé (72) qui amène la brosse en engagement de nettoyage avec des emplacements de sang (2) à nettoyer seulement lors du passage de ceux-ci.

19. Dispositif selon la revendication 17, **caractérisé en ce que** le moyen d'engagement commandé (72) comporte un élément de recouvrement qui recouvre la brosse (71), ne la libère que pour le nettoyage et dont la position est modifiable de façon correspondante.

20. Dispositif selon la revendication 18 ou 19, **caractérisé en ce que** le moyen d'engagement de brosse (72) comporte un moyen de déplacement (73) permettant de déplacer la brosse (71) en direction des emplacements de sang à nettoyer (2) et de l'éloigner de ces emplacements.

21. Dispositif selon l'une des revendications 16 à 20, **caractérisé en ce que** le dispositif de nettoyage (7), destiné à éliminer le sang cervical résiduel (22) se trouvant du côté de la queue, comporte un moyen commandé (74) destiné à presser le poisson (1) contre le moyen d'enlèvement (71) dans la région des emplacements de sang à nettoyer (2).

22. Dispositif selon l'une des revendications 12 à 21, **caractérisé en ce qu'**un dispositif à jet de liquide à haute pression (8), destiné à éliminer une poche de sang résiduel (23) se trouvant à l'extrémité de l'abdomen située du côté de la queue, est placé sur la section de transport.

23. Dispositif selon la revendication 21, **caractérisé en ce que** le dispositif de nettoyage (8), destiné à éliminer la poche de sang résiduel (23), est placé le long de la section de transport derrière le dispositif de retrait d'arête (6) par référence au sens de défilement de poisson (R).

24. Dispositif selon l'une des revendications 12 à 23, **caractérisé en ce que** au moins un dispositif de nettoyage (5 ; 8 ; 99) est placé au niveau d'au moins un corps de passage (42, 62) d'une station amont (4, 6), le corps de passage (42, 62) comportant au moins un passage (53 ; 83 ; 993) permettant le passage de liquide de nettoyage qui est projeté par au moins une buse (51 ; 81 ; 991), le corps de passage (42, 62) comportant avantageusement une surface de support (420) qui est dirigée vers le haut et qui est destinée à supporter le poisson du côté ventral.

25. Dispositif selon l'une des revendications 12 à 24, **caractérisé en ce qu'**un autre dispositif de nettoyage, se présentant sous la forme d'un dispositif de pulvérisation (99) destiné à laver les emplacements de sang (2), est placé derrière au moins un dispositif de nettoyage (5, 7), éliminant du sang résiduel (21, 22, 23), par référence au sens de défilement de poisson (R), le dispositif de pulvérisation (99) comportant au moins une buse de pulvérisation (991) délivrant un liquide de pulvérisation, en particulier de l'eau, à une pression statique faible.

26. Dispositif selon l'une des revendications 12 à 25, **caractérisé en ce qu'**un dispositif (4) destiné à découper la région du poisson (1) située du côté de la queue, latéralement à son arête principale (11), est placé le long de la section de transport avant le dispositif de nettoyage (5), destiné à éliminer le sang cervical résiduel (21) situé du côté de la tête, par référence au sens de défilement de poisson (R), le dispositif de coupe (4) étant placé en amont d'un dispositif de mesure, auquel est associé une voie de transport, qui est destiné à mesurer la longueur du poisson et à commander l'entraînement d'au moins un dispositif de nettoyage (5, 7, 8, 99) éliminant le sang résiduel (2).
